# EUROPEAN PATENT SPECIFICATION

(11) **EP 1 084 556 B1**
(45) Date of publication and mention of the grant of the patent: **24.03.2004**
(21) Application number: 99955378.7
(22) Date of filing: 01.06.1999
(51) Int. Cl.: H04L 29/06

(54) **DATA NETWORK ACCESS**
DATENNETZWERKZUGANG
ACCES A UN RESEAU DE DONNEES

(30) Priority: 02.06.1998 GB 9811862
(43) Date of publication of application: 21.03.2001
(73) Proprietor: BRITISH TELECOMMUNICATIONS public limited company, London EC1A 7AJ (GB)
(72) Inventor: BERRIE, Peter, London NW1 8LE (GB); BELL, Andrew, Charles, Dedham, Colchester CO7 6BN (GB)
(74) Representative: Nash, Roger William
(86) International application number: PCT/GB1999/001732
(87) International publication number: WO 1999/063724

(56) References cited:
- EP-A- 0 762 707
- EP-A- 0 765 068
- EP-A- 0 817 452
- WO-A-97/29584

## Description

This invention relates to a method of providing a connection between a user's terminal connected to a telephone network and a data network through an interface which is connected to both the telephone network and the data network. This invention also relates to an interface for providing such a connection service.

The most widespread data network in use at present is the well-known public Internet. User's computers operated by individuals from their homes or individuals belonging to a small organisation are usually connected to the Internet by a dial-up connection through a telephone network to an interface known as a point-of-presence. In presently known arrangements, the point-of-presence requires the user's computer to provide both a user name and password for authentication before it will connect the user's computer to the public Internet. Some users find it inconvenient to establish a user name and password before gaining access to the public Internet.

It will be well known that the so-called Point-to-Point Protocol (PPP) is a datalink protocol that allows IP traffic to be carried over serial lines. See, for example, Internet Engineering Task Force (IETF) Request For Comments (RFC) 1661. PPP provides for two types of password authentication, Password Authentication Protocol (PAP) and Challenge-Handshake Authentication Protocol (CHAP). See further, for example, IETF RFC 1334.

A typical Internet Service Provider (ISP) at the present time will thus permit a user to connect to the Internet by means of a connection over a telephone network to a so-called Network Access Server (NAS) using PPP. The NAS will then allow a connection to the Internet on condition that the user is authenticated.

If, for example, PAP authentication is utilised, the user will send a username and a plaintext password to the NAS. A process of authentication will then take place to ascertain whether or not that password is the valid password for the username in question. Authentication may, for example, take place through the use of a so-called Remote Authentication Dial In User Service (RADIUS) server. See yet further, for example, IETF RFC 2138. In this case, the NAS would pass the username and password to the RADIUS server and the RADIUS server would authenticate the username on the basis of comparing the password provided with the stored password corresponding to that username. If the password provided and the stored password match, then the RADIUS server would indicate to the NAS that that user had been authenticated and that the NAS may validly provide the user's computer with a network address, to allow subsequent access to the network.

CHAP authentication is considerably more secure than PAP authentication in that it does not send the plaintext password over the PPP link. CHAP authentication instead relies upon a comparison of the results of a particular computation performed upon a user's password by the user's computer and, with for example a RADIUS server, upon the stored password by the RADIUS server.

It may be the case that a user's password is the not the only authenticated attribute upon which access to a data network depends. A number of other attributes are known. The above mentioned IETF RFC 2138, for example, recites a list of such attributes. It is to be noted however that it is there provided, as was the opinion before the advent of the present invention, that, in these circumstances, for any user to be allowed access, verification of the user's password must always take place.

It will thus be appreciated that since such present day authentication relies upon the user's username and password, the means of authentication must already have a record of the user's username and password. As mentioned above, to gain access to, for example, the public Internet would thus inconveniently require that a user have a pre-established relationship with an Internet Service Provider.

International Patent Application PCT/FI97/00082 (published as W097/29584) discloses an arrangement comprising a computer, a telephone network, a local area network (LAN) of an Internet contact company and a data network. This arrangement provides a connection service between the computer and service providers which are connected to the data network. In response to the computer dialling a service provider's telephone number (B-number) from a computer telephone number (A-number) a connection is created through the telephone network between the computer and LAN subject to the condition that the A-number is included in a list of stored A-numbers that have access to the B-numbers. If the action condition is fulfilled, the LAN allocates an IP address to the computer and transmits the address to the computer. The LAN provides a connection between the computer and the data network.

According to one aspect of this invention there is provided a method of providing a connection service between a terminal and a data network, said terminal being arranged to be connected to an access network and said access network being connected to said data network through an interface, said method comprising the steps of:
in response to said terminal calling an interface access network address from a terminal access network address, said interface receiving a connection through said access network from said terminal;
said interface providing a connection between said terminal and said data network;
said method being characterised by the steps of:
said interface ascertaining an access network connection route attribute from said access network;
said interface checking that said access network connection route attribute is one of one or more valid access network connection route attributes associated with said connection service;
in the event that said access network connection route attribute is one of said valid access network connection route attributes, said interface allocating a data network address to said terminal and transmitting said address to said terminal.

With this invention, a user's computer can thus be connected to a data network without verification of a user name or password being necessary. Authentication is instead advantageously carried out on the basis of the telephone number dialled by the user's terminal to gain access to the connection service.

According to another aspect of this invention, there is provided an interface for providing a connection service between a terminal and a data network, said terminal being arranged to be connected to an access network and said access network being connected to said data network through said interface, said interface comprising:
means arranged to receive a connection through said access network from said terminal in response to said terminal calling an interface access network address from a terminal access network address;
means arranged to provide a connection between said terminal and said data network;
said interface being characterised by:
means arranged to ascertain an access network connection route attribute from said access network;
means arranged to check that said access network connection route attribute is one of one or more valid access network connection route attributes associated with said connection service; and
means responsive to said checking means arranged to allocate a data network address to said terminal and transmitting said address to said terminal in the event that said access network connection route attribute is one of said valid access network connection route attributes.

This invention will now be described in more detail, by way of example, with reference to the drawings in which:
Figure 1 is a block diagram of the components which are used to form a connection between a user's terminal and the public Internet in accordance with this invention; and
Figure 2 is a flow chart showing the operations which are used with the arrangement of Figure 1 to form a connection between the user's terminal and the public Internet.

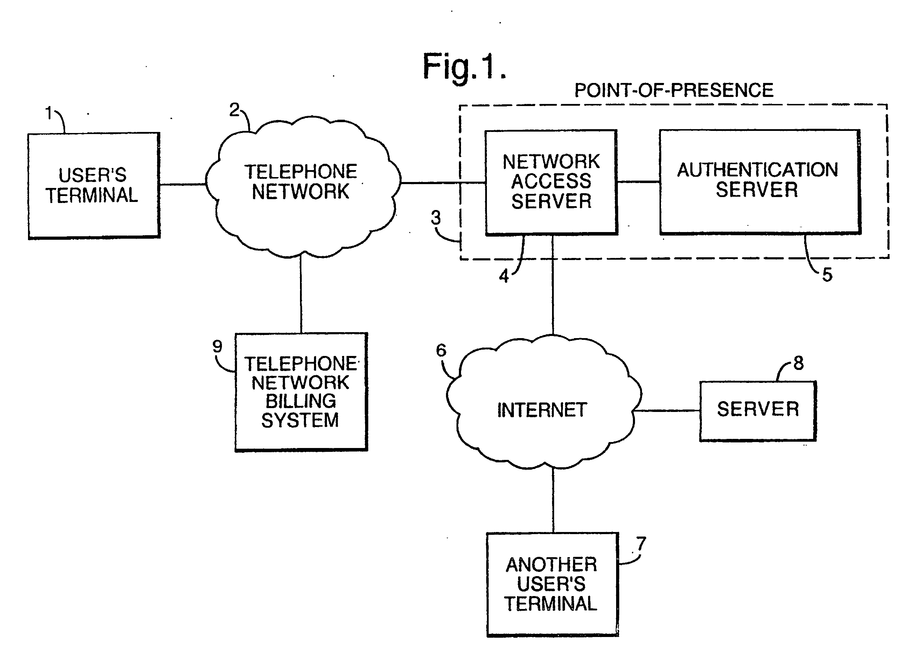

Referring now to Figure 1, there is shown a user's terminal 1 which is connected to a public telephone network 2. The user's terminal 1 may be connected on a digital or ISDN (Integrated Services Digital Network) tine or on an analogue line. Where the connection is on an analogue line, the user's terminal 1 is connected to the telephone network 2 through a modem.

The arrangement shown in Figure 1 also includes an interface known as a point-of-presence 3 comprising a network access server 4 and an authentication server 5. The point-of-presence 3 is connected to both the telephone network 2 and the public Internet 6. It will be appreciated that the public Internet 6 is shown by way of only one example of any number of such suitable data networks which might instead be connected to the network access server 4. By way of an alternative an authentication server 5 might perform authentication for more than one network access server 4, each such network access server 4 at the respective points-of-presence 3 being connected to a single such authentication server 5. Each of the servers 4 and 5 is a computer configured so as to provide the functionality described below. The authentication server 5 may, for example, be based upon a conventional RADIUS server, but modified in accordance with the invention. The network access server 4 includes a bank of modems for receiving calls on analogue lines.

By way of illustration, Figure 1 shows another user's computer 7 and also a further server computer 8 connected to the public Internet 6.

The telephone network 2 has a telephone service billing system 9. The operation of the billing system 9 will be described below.

The point-of-presence 3 is thus associated with an Internet Service Provider. The telephone network 2 and the point-of-presence 3 may be associated with the same operator or with different operators.

As is well-known, computers connected to the Internet can transmit messages to each other using Internet protocols. These include the Transmission Control Protocol (TCP) and the Internet Protocol (IP). Computers connected to the Internet can also retrieve information pages stored on server computers, such as the server computer 8, using higher level protocols. Several higher level protocols have been established for retrieving information pages and these include the File Transfer Protocol (FTP) and the now very well-known Hypertext Transfer Protocol (HTTP). Pages which are transmitted using the Hypertext Transfer Protocol are stored using the well-known Hypertext Mark-up Language (HTML). In order to retrieve such pages, a user's computer needs a suitable browser such as the well-known Netscape browser. One particular combination of the public Internet 6 and server computers connected to it and from which such information pages may be retrieved has become known as the World Wide Web (WWW). Information pages which may be retrieved from such server computers are commonly known as Web pages.

As indicated above, connection service methods known at the present time involving authentication on the basis of a username and password require a username and password to be stored at the point-of-presence or otherwise to be available therefrom prior to any connection session. As will become clear, in accordance with the invention this inconvenience is avoided. No pre-existing record of a username and a password for each user is required.

As will be explained, authentication instead takes place on the basis of a dialled telephone number. This merely requires that a record of pre-arranged valid connection service access telephone numbers instead be stored. This might, for example, take place through the operator of the point-of-presence storing such an access telephone number at the point-of-presence and then offering a connection service through that access telephone number. Alternatively, a third party, by prior arrangement with the point-of-presence operator and the telephone network operator if different, might be assigned a connection service access telephone number which is then stored at the point-of-presence.

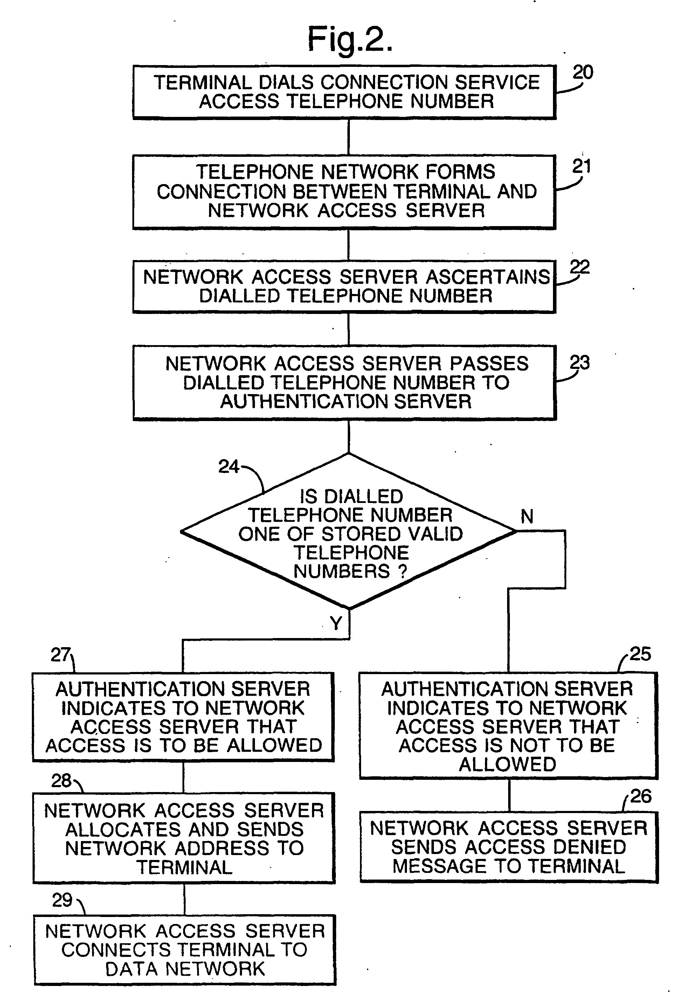

Referring now to Figure 2, there are shown the operations which are to be performed in providing a connection service for creating a connection between, for example, a user's terminal 1, and the public Internet 6.

In a first step 20, the user's terminal 1 dials a connection service access telephone number. This may, for example, be an ordinary local access telephone number or a special rate telephone number. The user of the user's terminal 1 may find it convenient to configure the terminal 1 with this dedicated telephone number. Alternatively, it may be possible to pre-configure the particular connection service access software used by the user's terminal 1 to call the desired telephone number.

Then, in a second step 21, the telephone network 2 forms a connection between the user's terminal 1 and the network access server 4 in the point-of-presence 3. It will be appreciated that this may occur in a number of ways. In the first place, the telephone number called by the user's terminal 1 may simply connect directly with the network access server 4. Alternatively, by prior arrangement, the telephone network 2 may be configured such that, when a user's terminal 1 calls the dialled telephone number, the telephone network 2 associates the called number with a different telephone number. The connection with the network access server 4 may then be completed using this different telephone number. Such number translation functionality will be known from the International Telegraph and Telephone Consultative Committee (CCITT) Common-Channel Signalling System No.7. It will be further appreciated that, for example, a number of such dedicated telephone numbers may be translated into a single access telephone number for the network access server 4.

Once the call initiated by the user's terminal 1 has been connected to the network access server 4, the network access server 4 then proceeds in a third step 22 to ascertain the telephone number to which the user's terminal 1 placed the call. Such dialled number functionality, commonly referred to as Dialled Number Information Service (DNIS), will be known from the International Telegraph and Telephone Consultative Committee (CCITT) Common-Channel Signalling System No.7.

It is to be noted that it may be the case that one of the above mentioned password authentication protocols is utilised at least as far as management of the link between the user's terminal 1 and the network access server 4 is concerned. This, for the purposes of the invention, would merely have the effect of providing a username and a dummy password associated with the user's terminal to the network access server 4.

Next, in a fourth step 23, the network access server 4 sends the associated authentication server 5 a message requesting access in respect of the user's terminal 1. This message will contain the number dialled by the user's terminal 1. This message will not however contain a password uniquely associated with the user's terminal 1 as required in these circumstances prior to the advent of the present invention. Whilst it is possible to deem the whole or a portion of the dialled telephone number to be an "effective password" , this cannot function as a password in the sense prevailing prior to the advent of the present invention as it cannot provide for a unique identification on a per user or per user's terminal basis.

In a fifth step 24, the authentication server 5 then checks to see if this dialled telephone number is one of one or more valid telephone numbers that are stored on the authentication server 5. As indicated above, these one or more valid telephone numbers will have been stored by prior arrangement and will be associated with either the point-of-presence operator itself or with a third party.

Thus if, for example, a dummy password had been passed to the network access server 4 from the user's terminal 1, this password would then be ignored for the purposes of the authentication process. Further, if, for example, a third party had reached a prior arrangement with the point-of-presence operator as indicated above, then the third party might have distributed connection service access software to potential customers of the connection service. This access software might have been pre-configured with a username corresponding to the third party. If this username had then been passed to the network access server 4, the point-of-presence could utilise the username to record usage information as to proportions of traffic originating with respective third party customers.

If the dialled telephone number is not one of the one or more valid telephone numbers then the connection has not been made on a valid telephone number and in a sixth step 25, the authentication server 5 returns a message to the network access server 4 that access is to be denied. In a seventh step 26, the user of the user's terminal 1 is informed that access has been denied by transmitting a message to the user's terminal 1.

If however the dialled telephone number is one of the one or more valid telephone numbers, then the connection has been received on a valid telephone number and in an eighth step 27, the authentication server 5 returns a message to the network access server 4 that access is to be allowed. In a ninth step 28, the network access server 4 then allocates an Internet Protocol network address to the user's terminal 1 and transmits this address to the user's terminal 1.

Finally, in a tenth step 29, the network access server 4 forms a connection between the user's terminal 1 and the Internet 6. The network access server 4 then permits messages to pass between the user's terminal 1 and the public Internet 6. Where such a message is being transmitted from the user's terminal 1 to the public Internet 6, it will contain the allocated Internet network address as the source address. Where the message is being passed from the public Internet 6 to the user's terminal 1, it will include the allocated Internet network address as the destination address. The user's computer can then transmit messages to other user's computers, such as the other user's computer 7 connected to the public Internet 6 using the Internet protocols mentioned above. The user's terminal 1 can also retrieve information pages from server computers, such as the server computer 8.

In an additional step in the authentication process, the network access server 4 may also ascertain the telephone number from which the user's terminal 1 placed the call. Such calling number functionality, commonly referred to as Calling Line Identity (CLI), will be known from the International Telegraph and Telephone Consultative Committee (CCITT) Common-Channel Signalling System No.7. The authentication server 5 may then, for example, compare the telephone number from which the user's terminal 1 placed the call with one or more stored telephone numbers which represent barred numbers. If the telephone number from which the user's terminal 1 placed the call is present on the list of such barred numbers then the authentication server 5 will not proceed to perform the authentication check on the basis of the telephone number which was dialled by the user's terminal 1. The authentication server 5 will instead return a message to the network access server 4 that access is to be denied. The network access server 4 may then send such an access denied message to the user's terminal 1. It will be appreciated that this pre-authentication check could instead test the number from which the user's terminal 1 made the call against a restricted group of one or more numbers from which network access requests are allowed to be made. It will be further appreciated that the authentication process described above in terms of the dialled number (DNIS) could be carried out instead on the basis of the calling number (CLI).

The arrangement shown in Figure 1 is capable of providing more than one type of connection service. Each of these services may have its own dedicated telephone number.

In a basic service, the user's terminal 1 may be given general access to the public Internet 6. Where a user is using this basic service, the user of the user's terminal 1 may be charged at, for example, an ordinary local access rate for the use of the connection through the telephone network 2 to the point-of-presence 3. The user will be billed at this rate on the number from which the user's terminal placed the connection service access call by the telephone service bitting system 9. Where the point-of-presence 3 and the telephone network 2 are owned by separate organisations, the telephone service billing system 9 may typically credit the owner of the Internet service provider with part of the call charge.

The arrangement shown in Figure 1 can also provide further services. Some information service providers require a payment for providing information. In a first further service, the network access server 4 provides access to one or a predefined set of server computers which provide information supplied by an information service provider and for which a payment is required. With this first further service, the call connection tariff includes a component to cover the payment required by the information service provider. The telephone service billing system 9 is arranged to credit part of the call charge to the information service provider. Thus, with this first further service, the user's terminal 1 gains access both to computers which can be accessed by general users of the Internet 6 as well as the one or predefined set of server computers mentioned above.

In a second further service, the user's terminal 1 may only be given access to one or a set of server computers which contain advertising material supplied by an information service provider. With this second service, the call tariff may be either at a reduced rate or a free rate with the information service provider paying some or all of the call charge. With this second service, the telephone service billing system 9 is arranged to charge the information service provider for some or all of the call charge. Thus, with this second service, the user's terminal 1 gains access to just one server or to a set of servers which are restricted in comparison with the servers which can be accessed by general users of the Internet 6.

In further services, yet further arrangements of restricted or expanded access to network servers may be envisaged. Such further services may be effected, as above, through a specification of the network addresses to which an authenticated user's terminal 1 has access. Likewise further charging arrangements commensurate with further business models may also be envisaged. The connection time telephone network billing system element of the network access charge might, for example, be reduced to zero in the basic service, in favour of, for example, a fixed monthly charge.

Each such service or indeed the same or similar services offered by different operators may each have their own associated connection service access telephone number.

It is to be noted that authentication according to the invention can be performed not only in terms of the dialled telephone number (DNIS) and/or the dialling telephone number (CLI) but also on the basis of other attributes associated with the connection service access route. Examples of other such attributes include, for example, the Network Access Server IP address or the Network Access Server Identifier, indicating the network termination point. Similarly, when access technologies other than, for example, PSTN or ISDN, are utilised, the similarly associated access route attributes of a connection service based on this access technology can be used for such authentication.

Such associated access route attributes will share the above illustrated advantages associated with authentication on a dialled number. Again, all that will be required for access to the desired data network will be that the correct access route attribute be presented to the authentication server, in like fashion with the above illustrated embodiment where, rather than having to dial a valid connection telephone number and have further attributes checked (which might be subject to change, either deliberate or accidental, by a user), dialling a valid connection service telephone number will alone suffice for connection to the data network of choice.

## Claims

1. A method of providing a connection service between a terminal (1) and a data network (6), said terminal (1) being arranged to be connected to an access network (2) and said access network (2) being connected to said data network (6) through an interface (3), said method comprising the steps of:
in response to said terminal (1) calling (20) an interface access network address from a terminal access network address, said interface (3) receiving a connection through said access network (6) from said terminal (1);
said interface (3) providing (29) a connection between said terminal (1) and said data network (6);
said method being **characterised by** the steps of:
said interface (3) ascertaining (22) an access network connection route attribute from said access network (2);
said interface (3) checking (24) that said access network connection route attribute is one of one or more valid access network connection route attributes associated with said connection service;
in the event that said access network connection route attribute is one of said valid access network connection route attributes, said interface (3) allocating (28) a data network address to said terminal (1) and transmitting (28) said address to said terminal (1).

2. A method as claimed in claim 1, wherein said access network (2) comprises a telephone network (2), said interface access network address comprises an interface telephone number, said terminal access network address comprises a terminal telephone number, said access network connection route attribute comprises said dialled interface telephone number and said one or more valid access network connection route attributes comprise one or more valid interface telephone numbers.

3. A method as claimed in claim 2, wherein in said step of said interface (3) providing (29) a connection between said terminal (1) and said data network (6), said connection is associated with a predefined set of data network addresses in said data network (6).

4. A method as claimed in claim 3, in which each said valid interface telephone number has an associated predefined set of data network addresses.

5. A method as claimed in claim 4, further including the step of arranging a telephone network billing system (9) to charge for access to each said valid interface telephone number at an associated pre-defined tariff.

6. A method as claimed in any of claims 2 to 5, in which in the step of said interface (3) receiving a connection through said telephone network from said terminal, said telephone network (2) is arranged to associate said dialled interface telephone number with a further interface telephone number, said further interface telephone number being used to complete said connection.

7. A method as claimed in any of claims 2 to 6, further comprising the steps of:
said interface (3) ascertaining said terminal telephone number;
said interface (3) checking that said terminal telephone number is not one of one or more invalid terminal telephone numbers associated with said connection service; and
in the event that said terminal telephone number is one of said one or more invalid terminal telephone numbers, said interface (3) denying a connection between said terminal (1) and said data network (6).

8. A method as claimed in any of claims 2 to 7, in which said interface (3) comprises:
data network access means (4) connected to both said telephone network (2) and said data network (6); and
authentication means (5);
said method including the steps of:
said data network access means (4) ascertaining (22) said dialled interface telephone number from said telephone network (2);
passing (23) said ascertained dialled interface telephone number to said authentication means (5);
said authentication means (5) checking (24) that said dialled interface telephone number is one of one or more valid interface telephone numbers associated with said connection service; and
in the event that said dialled interface telephone number is one of said valid interface telephone numbers, said authentication means (5) causing said data network access means (4) to allocate (28) a data network address to said terminal (1) and to transmit (28) said address to said terminal (1).

9. An interface (3) for providing a connection service between a terminal (1) and a data network (6), said terminal (1) being arranged to be connected to an access network (2) and said access network (2) being connected to said data network (6) through said interface (3), said interface (3) comprising:
means (4) arranged to receive a connection through said access network (2) from said terminal (1) in response to said terminal (1) calling an interface access network address from a terminal access network address;
means (4) arranged to provide a connection between said terminal (1) and said data network (6);
said interface (3) being **characterised by**:
means (4) arranged to ascertain an access network connection route attribute from said access network (2);
means (5) arranged to check that said access network connection route attribute is one of one or more valid access network connection route attributes associated with said connection service; and
means (4) responsive to said checking means arranged to allocate a data network address to said terminal (1) and transmitting said address to said terminal (1) in the event that said access network connection route attribute is one of said valid access network connection route attributes.

10. An interface (3) as claimed in claim 9, wherein said access network (2) comprises a telephone network (2), said interface access network address comprises an interface telephone number, said terminal access network address comprises a terminal telephone number, said access network connection route attribute comprises said dialled interface telephone number and said one or more valid access network connection route attributes comprise one or more valid interface telephone numbers.

11. An interface (3) as claimed in claim 10 wherein said means (4) arranged to provide a connection between said terminal (1) and said data network (6), is arranged to associate said connection with a predefined set of data network addresses in said data network (6).

12. An interface (3) as claimed in claim 11 in which each said valid interface telephone number has an associated predefined set of data network addresses.

13. An interface as claimed in any one of claims 10 to 12, further comprising:
means (4) arranged to ascertain said terminal telephone number;
means (5) arranged to check that said terminal telephone number is not one of one or more invalid terminal telephone numbers associated with said connection service; and
means (4) arranged to deny a connection between said terminal (1) and said data network (6) in the event that said terminal telephone number is one of said one or more invalid terminal telephone numbers.

## Patentansprüche

1. Verfahren zum Bereitstellen eines Verbindungsdienstes zwischen einem Endgerät (1) und einem Datennetzwerk (6), wobei das Endgerät (1) dazu eingerichtet ist, mit einem Zugangsnetzwerk (2) verbunden zu werden, und das Zugangsnetzwerk (2) mit dem Datennetzwerk (6) über eine Schnittstelle (3) verbunden ist, wobei das Verfahren die folgenden Schritte umfasst:
als Reaktion darauf, dass das Endgerät (1) eine Adresse der Schnittstelle im Zugangsnetzwerk von einer Adresse des Endgerätes im Zugangsnetzwerk aus anruft (20), bekommt die Schnittstelle (3) eine Verbindung von dem Endgerät (1) über das Zugangsnetzwerk (6);
die Schnittstelle (3) stellt eine Verbindung zwischen dem Endgerät (1) und dem Datennetzwerk (6) bereit (29);
wobei das Verfahren durch folgende Schritte gekennzeichnet ist:
die Schnittstelle (3) ermittelt (22) ein Attribut der Verbindungsroute des Zugangsnetzwerks aus dem Zugangsnetzwerk (2),
die Schnittstelle (3) überprüft (24), dass das Attribut der Verbindungsroute des Zugangsnetzwerks eines von einem oder mehreren gültigen Attributen der Verbindungsroute des Zugangsnetzwerks ist, die dem Verbindungsdienst zugeordnet sind;
wenn das Attribut für die Verbindungsroute des Zugangsnetziverks eines der gültigen Attribute der Verbindungsroute des Zugangsnetzwerks ist, ordnet (28) die Schnittstelle (3) dem Endgerät (1) eine Datennetzwerkadresse zu (28) und überträgt die Adresse an das Endgerät (1).

2. Verfahren wie in Anspruch 1 beansprucht, bei dem das Zugangsnetzwerk (2) ein Telefonnetzwerk (2) umfasst, wobei die Adresse des Zugangsnetzwerks der Schnittstelle eine Telefonnummer der Schnittstelle umfasst, die Adresse des Zugangsnetzwerks des Endgerätes eine Telefonnummer des Endgerätes umfasst, das Attribut der Verbindungsroute des Zugangsnetzwerks die angewählte Nummer der Schnittstelle umfasst und das eine oder die mehreren gültigen Attribute der Verbindungsroute des Zugangsnetzwerks eine oder mehrere gültige Telefonnummern umfasst.

3. Verfahren nach Anspruch 2, bei dem in dem Schritt der Bereitstellung (29) einer Verbindung zwischen dem Endgerät (1) und dem Datennetzwerk (6) die Verbindung mit einem vorher festgelegten Satz von Datennetzwerkadressen in dem Datennetzwerk (6) in Verbindung gebracht wird.

4. Verfahren wie in Anspruch 3 beansprucht, bei dem jede gültige Telefonnummer der Schnittstelle einen zugeordneten, vorher festgelegten Satz von Datennetzwerkadressen hat.

5. Verfahren wie in Anspruch 4 beansprucht, das weiter den Schritt des Einrichtens eines Telefonnetzwerkabrechnungssystems (9) umfasst, um für den Zugang zu jeder gültigen Telefonnummer der Schnittstelle einen zugeordneten, vorher festgelegten Tarif zu berechnen.

6. Verfahren wie in irgendeinem der Ansprüche 2 bis 5 beansprucht, in dem der Schritt, in dem die Schnittstelle (3) eine Verbindung von dem Endgerät (1) aus über das Zugangsnetzwerk (6) bekommt, das Telefonnetzwerk (2) dazu eingerichtet wird, die gewählte Telefonnummer der Schnittstelle mit einer weiteren Telefonnummer der Schnittstelle in Verbindung zu bringen, wobei die weitere Telefonnummer der Schnittstelle verwendet wird, um die Verbindung herzustellen.

7. Verfahren wie in irgendeinem der Ansprüche 2 bis 6 beansprucht, das weiter folgende Schritte umfasst:
die Schnittstelle (3) erfasst die Telefonnummer des Endgerätes;
die Schnittstelle (3) überprüft, dass die Telefonnummer des Endgerätes nicht eine der einen oder mehreren ungültigen Telefonnummern des Endgerätes ist, die dem Verbindungsdienst zugeordnet sind, und
bei dem Ereignis, dass die Telefonnummer des Endgerätes eine der einen oder der mehreren ungültigen Telefonnummern des Endgerätes ist, verweigert die Schnittstelle (3) eine Verbindung zwischen dem Endgerät (1) und dem Datennetzwerk (6).

8. Verfahren nach einem der Ansprüche 2 bis 7, bei dem die Schnittstelle (3) folgendes umfasst:
eine Zugangseinrichtung für das Datennetzwerk (4), die sowohl mit dem Telefonnetzwerk (2), als auch mit dem Datennetzwerk (6) verbunden ist, und
eine Authentifizierungseinrichtung (5);
wobei das Verfahren folgende Schritte enthält:
die Zugangseinrichtung für das Datennetzwerk (4) erfasst (22) die von dem Telefonnetzwerk (2) aus gewählte Telefonnummer der Schnittstelle;
Weitergeben (23) der erfassten gewählten Telefonnummer der Schnittstelle an die Authentifizierungseinrichtung (5);
die Authentifizierungseinrichtung (5) überprüft (24), dass die gewählte Telefonnummer der Schnittstelle eine der einen oder mehreren gültigen Telefonnummern der Schnittstelle ist, die dem Verbindungsdienst zugeordnet sind; und
bei dem Ereignis, dass die gewählte Telefonnummer der Schnittstelle eine der gültigen Telefonnummern der Schnittstelle ist, veranlasst die Authentifizierungseinrichtung (5) die Zugangseinrichtung des Datennetzwerks (4), dem Endgerät (1) eine Datennetzwerkadresse zuzuordnen (28), und die Adresse an das Endgerät (1) zu senden.

9. Schnittstelle (3) zum Bereitstellen eines Verbindungsdienstes zwischen einem Endgerät (1) und einem Datennetzwerk (6), wobei das Endgerät (1) dazu eingerichtet ist, mit einem Zugangsnetzwerk (2) verbunden zu werden, und das Zugangsnetzwerk (2) mit dem Datennetzwerk (6) über die Schnittstelle (3) verbunden ist, wobei die Schnittstelle (3) folgendes umfasst:
eine Einrichtung (4), die dazu eingerichtet ist, eine Verbindung über das Zugangsnetzwerk (2) von dem Endgerät (1) als Reaktion darauf zu bekommen, dass das Endgerät (1) eine Adresse der Schnittstelle im Zugangsnetzwerk von einer Adresse des Endgerätes im Zugangsnetzwerks aus anruft;
eine Einrichtung (4), die dazu eingerichtet ist, eine Verbindung zwischen dem Endgerät (1) und dem Datennetzwerk (6) herzustellen;
wobei die Schnittstelle (3) durch folgendes gekennzeichnet ist:
eine Einrichtung (4), die dazu eingerichtet ist, ein Attribut der Verbindungsroute des Zugangsnetzwerks von dem Zugangsnetzwerk (2) zu ermitteln;
eine Einrichtung (5), die dazu eingerichtet ist, zu überprüfen, dass das Attribut der Verbindungsroute des Zugangsnetzwerks eines von einem oder mehreren gültigen Attributen der Verbindungsroute des Zugangsnetzwerks ist, die mit dem Verbindungsdienst verbunden sind; und
eine Einrichtung (4), die auf die Überprüfungseinrichtung reagiert und die dazu eingerichtet ist, dem Endgerät (1) eine Datennetzwerk-adresse zuzuordnen und die Adresse zu dem Endgerät (1) bei dem Ereignis zu übertragen, dass das Attribut der Verbindungsroute des Zugangsnetzwerks eines der gültigen Attribute der Verbindungsroute des Zugangsnetzwerks ist.

10. Schnittstelle (3) wie in Anspruch 9 beansprucht, bei der das Zugangsnetzwerks (2) ein Telefonnetzwerk (2) umfasst, wobei die Adresse des Zugangsnetzwerks der Schnittstelle eine Telefonnummer der Schnittstelle umfasst, die Adresse des Zugangsnetzwerks des Endgerätes eine Telefonnummer des Endgerätes umfasst, das Attribut der Verbindungsroute des Zugangsnetzwerks die angewählte Telefonnummer der Schnittstelle umfasst, und das eine oder die mehreren gültigen Attribute der Verbindungsroute des Zugangsnetzwerks eine oder mehrere gültige Telefonnummern der Schnittstelle umfassen.

11. Schnittstelle (3) wie in Anspruch 10 beansprucht, bei der die Einrichtung (4), die dazu eingerichtet ist, eine Verbindung zwischen dem Endgerät (1) und dem Datennetzwerk (6) herzustellen, dazu eingerichtet ist, die Verbindung mit einem vorher festgelegten Satz von Datennetzwerkadressen in dem Datennetzwerk (6) in Verbindung zu bringen.

12. Schnittstelle (3) wie in Anspruch 11 beansprucht, bei der jede gültige Telefonnummer der Schnittstelle einen zugehörigen Satz von Datennetzwerkadressen hat.

13. Schnittstelle wie in einem der Ansprüche 10 bis 12 beansprucht, die weiter folgendes umfasst:
eine Einrichtung (4), die dazu eingerichtet ist, die Telefonnummer des Endgerätes zu erfassen;
eine Einrichtung (5), die dazu eingerichtet ist, zu überprüfen, dass die Telefonnummer des Endgerätes nicht eine der einen oder mehreren ungültigen Telefonnummern des Endgerätes ist, die dem Verbindungsdienst zugeordnet sind; und
eine Einrichtung (4), die dazu eingerichtet ist, eine Verbindung zwischen dem Endgerät (1) und dem Datennetzwerk (6) bei dem Ereignis zu verweigern, dass die Telefonnummer des Endgerätes eine der einen oder mehreren ungültigen Telefonnummern des Endgerätes ist.

## Revendications

1. Procédé de fourniture d'un service de connexion entre un terminal (1) et un réseau de données (6), ledit terminal (1) étant agencé pour être connecté à un réseau d'accès (2) et ledit réseau d'accès (2) étant connecté audit réseau de données (6) par l'intermédiaire d'une interface (3), ledit procédé comprenant les étapes suivantes :
en réponse à l'appel (20) par ledit terminal (1) d'une adresse d'interface de réseau d'accès à partir d'une adresse de terminal de réseau d'accès, ladite interface (3) reçoit une connexion par l'intermédiaire dudit réseau d'accès (6) depuis ledit terminal (1),
ladite interface (3) fournit (29) une connexion entre ledit terminal (1) et ledit réseau de données (6),
ledit procédé étant **caractérisé par** les étapes suivantes :
ladite interface (3) s'assure (22) d'un attribut d'itinéraire de connexion de réseau d'accès auprès dudit réseau d'accès (2),
ladite interface (3) contrôle (24) que ledit attribut d'itinéraire de connexion de réseau d'accès est l'un de un ou plusieurs attributs d'itinéraire de connexion de réseau d'accès valides associés audit service de connexion,
dans le cas où ledit attribut d'itinéraire de connexion de réseau d'accès est l'un desdits attributs d'itinéraire de connexion de réseau d'accès valides, ladite interface (3) alloue (28) une adresse de réseau de données audit terminal (1) et transmet (28) ladite adresse audit terminal (1).

2. Procédé selon la revendication 1, dans lequel ledit réseau d'accès (2) comprend un réseau téléphonique (2), ladite adresse d'interface de réseau d'accès comprend un numéro de téléphone d'interface, ladite adresse de terminal de réseau d'accès comprend un numéro de téléphone de terminal, ledit attribut d'itinéraire de connexion de réseau d'accès comprend ledit numéro de téléphone d'interface composé et lesdits un ou plusieurs attributs d'itinéraire de connexion de réseau d'accès valides comprennent un ou plusieurs numéros d'interface valides.

3. Procédé selon la revendication 2, dans lequel, dans ladite étape où ladite interface (3) fournit (29) une connexion entre ledit terminal (1) et ledit réseau de données (6), ladite connexion est associée à un ensemble prédéfini d'adresses de réseau de données dans ledit réseau de données (6).

4. Procédé selon la revendication 3, dans lequel chaque dit numéro de téléphone d'interface valide comporte un ensemble prédéfini associé d'adresses de réseau de données.

5. Procédé selon la revendication 4, comprenant en outre l'étape consistant à agencer un système de facturation de réseau téléphonique (9) pour facturer un accès à chaque dit numéro de téléphone d'interface valide à un tarif prédéfini associé.

6. Procédé selon l'une quelconque des revendications 2 à 5, dans lequel, dans l'étape où ladite interface (3) reçoit une connexion par l'intermédiaire dudit réseau téléphonique depuis ledit terminal, ledit réseau téléphonique (2) est agencé pour associer ledit numéro de téléphone d'interface composé à un autre numéro de téléphone d'interface, ledit autre numéro de téléphone d'interface étant utilisé pour exécuter ladite connexion.

7. Procédé selon l'une quelconque des revendications 2 à 6, comprenant en outre les étapes suivantes :
ladite interface (3) s'assure dudit numéro de téléphone de terminal,
ladite interface (3) contrôle que ledit numéro de téléphone de terminal n'est pas l'un de un ou plusieurs numéros de téléphone de terminaux invalides associés audit service de connexion, et
dans le cas où ledit numéro de téléphone de terminal est l'un desdits un ou plusieurs numéros de téléphone de terminaux invalides, ladite interface (3) refuse une connexion entre ledit terminal (1) et ledit réseau de données (6).

8. Procédé selon l'une quelconque des revendications 2 à 7, dans lequel ladite interface (3) comprend :
un moyen d'accès au réseau de données (4) relié à la fois audit réseau téléphonique (2) et audit réseau de données (6), et
un moyen d'authentification (5),
ledit procédé comprenant les étapes suivantes :
ledit moyen d'accès au réseau de données (4) s'assure (22) dudit numéro de téléphone d'interface composé auprès dudit réseau téléphonique (2),
la transmission (23) dudit numéro de téléphone d'interface composé confirmé audit moyen d'authentification (5) ,
ledit moyen d'authentification (5) contrôle (24) que ledit numéro de téléphone d'interface composé est l'un de un ou plusieurs numéros de téléphone d'interface valides associés audit service de connexion, et
dans le cas où ledit numéro de téléphone d'interface composé est l'un desdits numéros de téléphone d'interface valides, ledit moyen d'authentification (5) fait allouer (28) par ledit moyen d'accès au réseau de données (4) une adresse de réseau de données audit terminal (1) et transmettre (28) par ledit moyen d'accès au réseau de données (4) ladite adresse audit terminal (1).

9. Interface (3) destinée à fournir un service de connexion entre un terminal (1) et un réseau de données (6), ledit terminal (1) étant agencé pour être connecté à un réseau d'accès (2) et ledit réseau d'accès étant connecté audit réseau de données (6) par l'intermédiaire de ladite interface (3), ladite interface (3) comprenant :
un moyen (4) agencé pour recevoir une connexion par l'intermédiaire dudit réseau d'accès (2) depuis ledit terminal (1) en réponse à l'appel par ledit terminal (1) d'une adresse d'interface de réseau d'accès à partir d'une adresse de terminal de réseau d'accès,
un moyen (4) agencé pour fournir une connexion entre ledit terminal (1) et ledit réseau de données (6),
ladite interface (3) étant **caractérisée par** :
un moyen (4) agencé pour s'assurer d'un attribut d'itinéraire de connexion de réseau d'accès auprès dudit réseau d'accès (2),
un moyen (5) agencé pour contrôler que ledit attribut d'itinéraire de connexion de réseau d'accès est l'un de un ou plusieurs attributs d'itinéraire de connexion de réseau d'accès valides associés audit service de connexion, et
un moyen (4) répondant audit moyen de contrôle agencé pour allouer une adresse de réseau de données audit terminal (1) et transmettant ladite adresse audit terminal (1) dans le cas où ledit attribut d'itinéraire de connexion de réseau d'accès est l'un desdits attributs d'itinéraire de connexion de réseau d'accès valides.

10. Interface (3) selon la revendication 9, dans lequel ledit réseau d'accès (2) comprend un réseau téléphonique (2), ladite adresse d'interface de réseau d'accès comprend un numéro de téléphone d'interface, ladite adresse de terminal de réseau d'accès comprend un numéro de téléphone de terminal, ledit attribut d'itinéraire de connexion de réseau d'accès comprend ledit numéro de téléphone d'interface composé, et lesdits un ou plusieurs attributs d'itinéraire de connexion de réseau d'accès valides comprennent un ou plusieurs numéros de téléphone d'interfaces valides.

11. Interface (3) selon la revendication 10, dans lequel ledit moyen (4) agencé pour fournir une connexion entre ledit terminal (1) et ledit réseau de données (6) est agencé pour associer ladite connexion à un ensemble prédéfini d'adresses de réseau de données dans ledit réseau de données (6).

12. Interface (3) selon la revendication 11, dans laquelle chaque dit numéro de téléphone d'interface valide comporte un ensemble prédéfini associé d'adresses de réseau de données.

13. Interface selon l'une quelconque des revendications 10 à 12, comprenant en outre :
un moyen (4) agencé pour s'assurer dudit numéro de téléphone de terminal,
un moyen (5) agencé pour contrôler que ledit numéro de téléphone de terminal n'est pas l'un de un ou plusieurs numéros de téléphone de terminaux invalides associés audit service de connexion, et
un moyen (4) agencé pour refuser une connexion entre ledit terminal (1) et ledit réseau de données (6) dans le cas où ledit numéro de téléphone de terminal est l'un desdits un ou plusieurs numéros de téléphone de terminaux invalides.
